# EUROPÄISCHE PATENTSCHRIFT

(11) **EP 3 232 541 B1**
(45) Veröffentlichungstag und Bekanntmachung des Hinweises auf die Patenterteilung: **26.12.2018**
(21) Anmeldenummer: 17163602.0
(22) Anmeldetag: 29.03.2017
(51) Int. Cl.: H02K 3/52, H02K 5/08, H02K 1/18, F04D 13/06, F04D 29/046, F04D 29/22, F04D 29/42, H02K 1/14, H02K 1/27, H02K 5/02, H02K 5/128, H02K 5/24, H02K 7/14, H02K 11/00, H02K 15/02, H02K 15/14, H02K 11/33

(54) **ELEKTROMOTOR, INSBESONDERE PUMPENMOTOR**
ELECTRIC MOTOR, IN PARTICULAR PUMP MOTOR
MOTEUR ÉLECTRIQUE, EN PARTICULIER MOTEUR DE POMPE

(30) Priorität: 15.04.2016 DE 102016206404
(43) Veröffentlichungstag der Anmeldung: 18.10.2017
(73) Patentinhaber: Bühler Motor GmbH, 90459 Nürnberg (DE)
(72) Erfinder: SCHUPFNER, Maximilian, 91452 Wilhermsdorf (DE); HÄUSLER, Thomas, 90522 Oberasbach (DE); KRAUSE, Matthias, 90461 Nürnberg (DE); EHRSAM, Jürgen, 90766 Fürth (DE); RAUSCH, Harald, 90766 Fürth (DE)

(56) Entgegenhaltungen:
- EP-A2- 0 027 428
- WO-A1-2015/132416
- DE-A1- 3 633 857
- DE-A1-102009 047 332
- DE-A1-102015 106 186
- JP-A- 2007 288 959
- JP-A- 2012 110 165
- US-A1- 2016 105 066

## Beschreibung

Die Erfindung betrifft einen Elektromotor (1), insbesondere Pumpenmotor, mit einem Permanentmagnetrotor (2), einem bewickelten Stator (4), umfassend ein Statorblechpaket (38), Isolierelemente (5, 6) und eine Statorwicklung (40), einem aus Kunststoffmaterial bestehenden Motorgehäuse (10) und einem ein Rotorlager tragendes Bauteil, insbesondere einem Pumpenkopf (11).

Bei Verbrennungsmotoren im Kfz-Bereich sind in der Regel von der Kurbelwelle über einen Zahnriemen angetriebene mechanische Pumpen als Hauptkühlwasserpumpe vorhanden. Als Unterstützung oder ersatzweise bei abgestelltem Verbrennungsmotor kommen elektrische Zusatzkühlwasserpumpen zum Einsatz, die in der Regel als elektronisch kommutierte Gleichstrommotoren ausgebildet sind. Auch Hauptkühlwasserpumpen können elektrisch betrieben sein. Gleichfalls werden Kühlwasserpumpen auch bei Hybrid- und Elektrofahrzeugen eingesetzt. Dort vor allem im Kühlkreislauf einer Akkukühlung. Elektronisch kommutierte Gleichstrommotoren werden weiter als Antrieb für Gebläse, Luft-Kraftstoff- und Ölpumpen verwendet. Aus der DE 10 2009 074 332 A1 ist ein gattungsgemäßer Elektromotor bekannt, bei welchem der Stator mit dem Motorgehäuse verschweißt ist. Bei der bekannten Pumpe besteht die Gefahr, dass bei starken Temperaturschwankungen durch die unterschiedlichen verwendeten Materialien (Metall, Kunststoff) aufgrund von Wärmeausdehnungsdifferenzen Beschädigungen der Schweißverbindung auftreten. Zudem können durch die gezeigte großflächige Anlage von Statorteilen am Motorgehäuse unerwünschte Geräuschübertragungen stattfinden.

Aus der nächstliegenden DE 10 2009 047 332 A1 ist ein Elektromotor, insbesondere ein Pumpenmotor mit einem Permanentmagnetrotor, einem bewickelten Stator, einem Statorblechpaket, Isolierelemente, eine Statorwicklung, einem aus Kunststoffmaterial bestehenden Motorgehäuse und einem ein Rotorlager tragendes Bauteil, insbesondere einem Pumpenkopf, wobei zumindest eines der Isolierelemente mit dem Motorgehäuse verschweißt ist, bekannt.

Die US 2016/105066 A1 offenbart einen Innenläufermotor, der keinen elektrischen Leitungsweg zwischen einem Eisenkern und einem Gehäuse des Motors bildet. Der Innenläufermotor weist ein Gehäuse, eine Isolierschicht und einen Eisenkern auf. Die Isolierschicht ist zwischen dem Gehäuse und dem Eisenkern angeordnet und umfasst einen Verbindungsabschnitt mit zwei Enden, die jeweils mit dem Gehäuse und dem Eisenkern verbunden sind. Der Verbindungsabschnitt kann sich entlang einer radialen Richtung der Welle erstrecken, um das Gehäuse und den Eisenkern voneinander zu trennen, wodurch ein Spalt zwischen dem Gehäuse und dem Eisenkern gebildet wird.

Aus der WO 2015/132416 A1 ist eine elektrische Maschine, beispielsweise für ein Stromerzeugungsaggregat, insbesondere für die Reichweitenerhöhung eines elektrisch betriebenen Fahrzuges bekannt, die ein Gehäuse, einen Stator, einen Rotor und eine Kühlkanalanordnung aufweist. Zur Befestigung des Stators am Gehäuse sind ringförmige Randbereiche einer radialen Außenbegrenzung und einer radialen Innenbegrenzung vorgesehen, die durch Kleben oder Schweißen mit dem Gehäuse verbunden werden.

Die DE 10 2015 106 186 A1 offenbart einen Elektromotor mit einem Stator und einem Rotor. Der Stator weist einen Statorkern, eine Statorwicklung, einen ersten Isolierrahmen, der eine Vielzahl von ersten Isolierarmen hat und einen zweiten Isolierrahmen, der eine Vielzahl von zweiten Isolierarmen hat, auf. Zumindest ein Isolierrahmen weist eine im Wesentlichen ringförmige Abdeckscheibe auf. Die Isolierarme weisen Fahnen auf, die sich axial in Nuten des Statorblechpakets erstrecken.

Aus der JP 2012 1101 65 A ist eine elektrische Pumpe mit einem Motorsteuerteil A und einem Motorteil B bekannt. Das Motorsteuerteil umfasst ein Schaltungsgehäuse, das frei mit einem Pumpenteil befestigten Motorteil B verbindbar ist, eine Trägerplatte, eine Leiterplatte und elektrische Bauelemente. Die Leiterplatte ist von der Trägerplatte gehalten.

Die JP 2007 288959 A offenbart einen bürstenlosen Motor mit einem Stator und einem Rotor. Der Stator weist einen Statorkern auf, der so angeordnet ist, dass er einem äußeren Umfang des Antriebsmagneten gegenüberliegt. Der Motor weist zudem ein magnetisches Detektionselement zur Bestimmung einer Magnetpolposition des Antriebsmagneten, eine Antriebssteuerung zum Antreiben und Steuern des Rotors, Antriebssteuerungsschalttafeln mit Schaltkreisen und ein Motorgehäuse, an dem der Statorkern befestigt ist, auf.

Aus der DE 36 33 857 A1 ist ein Stator einer elektrischen Maschine mit einem Statorblechpaket, bei dem das geschichtete Blechpaket über Druckfinder, Pressringe und Spannvorrichtungen zu einem geschlossenen Paket axial verpresst ist, bekannt. Ein schaltseitiger Pressring ist mit dem Statorgehäuse starr verbunden und an Stegen mit der Statorgehäuseinnenwandung verschweißt. Im entspannten Zustand ist der Pressring mühelos ins Motorgehäuse montierbar.

Die EP 0 027 428 A2 offenbart eine elektrische Maschine mit einem als Einschieber ausgebildenten Ständerblechpaket, das in axialer Richtung mit Hilfe von Druckplatten verspannt, durch am Rücken angeordnete Rippen versteift und in Ringwänden des Gehäuses auf den Außenflächen der Druckplatten gelagert ist. Die Druckplatten sind mit den Ringwänden jeweils durch eine Schweißnaht verbunden. Sofern sich die Schweißnähte nur entlang eines Teiles des Umfanges erstrecken, ist am Ende der Schweißnaht in der Druckplatte eine abgerundete Aussparung vorgesehen.

Aufgabe der Erfindung ist es daher bei einem gattungsgemäßen Elektromotor für eine zuverlässige und wirtschaftlich herstellbare Befestigung des Stators am Motorgehäuse zu sorgen, wobei Wärmedehnungsbrüche vermieden und Geräuschübertragungen reduzierbar sind.

Diese Aufgabe wird durch die Merkmale des Anspruchs 1 gelöst. Durch das Verschweißen eines Isolierelements mit dem Motorgehäuse, können Geräuschquellen oder Geräuschüberträger, z. B. ein Spalttopf vom Stator entkoppelt werden. Hierdurch ist eine deutliche Geräuschreduzierung möglich. Weiter sind eine Verkürzung von Toleranzketten und eine exakte Positionierung weiterer Komponenten, wie einer Elektronik zum Gehäuse möglich. Die Verschweißung ermöglicht im Übrigen eine direkte Einleitung von Statorkräften ins Gehäuse und dadurch eine Entlastung von Verbindungsstellen zwischen dem Rotorlager tragenden Bauteil, z. B. Pumpenkopf und dem Motorgehäuse und ggf. einem Spalttopf. Zudem können Verbindungselemente und somit Gewicht eingespart werden. Aufgrund größerer Toleranzen und geringerer Teileanzahl ist eine besonders wirtschaftliche Herstellung möglich. Um auch bei großen Temperaturunterschieden eine feste mechanische und spielfreie Verbindung zu gewährleisten sind Axialspielausgleichsmittel vorgesehen, die insbesondere unterschiedliche Längenausdehnungen zwischen dem Kunststoffgehäuse des Motorgehäuses und dem Metallmaterial des Statorblechpakets ausgleichen können. Diese Axialspielausgleichsmittel werden durch eine besondere geometrische Formgebung der Befestigungsvorsprünge und deren Brückenabschnitte zum Isolierelement hergestellt, indem Freisparungen und/oder auslenkbare Arme vorgesehen werden und/oder die Brückenabschnitte als nachgiebige Bereiche ausgebildet sind.

Weiterbildungen der Erfindung werden in den Unteransprüchen dargestellt. Die genannten Vorteile sind noch deutlicher erreichbar, wenn beide Isolierelemente mit dem Motorgehäuse verschweißt sind.

Für die Schweißverbindung mit dem Gehäuse sind zusätzlich Befestigungsvorsprünge vorgesehen, die sich radial in Richtung des Motorgehäuses erstrecken. Hierdurch kann der Stator mit einem geringen Abstand zum Motorgehäuse gehalten und dadurch Geräuschübertragungen unterbunden oder zumindest deutlich vermindert werden. Durch die Anbindung am Motorgehäuse kann der Stator zudem von einem Spalttopf entkoppelt werden.

Es ist jedoch auch möglich, dass das Motorgehäuse nachgiebige Befestigungsbereiche umfasst, mit welchen zumindest eines der Isolierelemente verschweißt ist. Auch eine Kombination ist möglich, bei welcher sowohl die Isolierelemente als auch das Motorgehäuse mit nachgiebigen Bereichen versehen ist.

Für eine gute Isolierwirkung reicht häufig eine im Wesentlichen ringförmige Abdeckscheibe aus.

Die Isolierelemente können auf unterschiedliche Weise ausgebildet sein. Besonders zweckmäßig haben sich Isolierelemente erwiesen, welche neben der ringförmigen Abdeckscheibe auch sich axial in Statornuten erstreckende Nutauskleidungen aufweisen. Neben der isolierenden Wirkung tragen die Nutauskleidungen auch zu einer stabileren Befestigung des Stators im Motorgehäuse bei, weil sie tief in die Statornuten eingreifen und durch die Vielzahl der Nutauskleidungen einen festen Halt des Statorkerns, insbesondere des Statorblechpakets bewirken. Schließlich werden die Isolierelemente durch den Drahtzug der Statorwicklung auf dem Statorkern gehalten.

Durch die Anformung von Axialvorsprüngen am zweiten Isolierelement ergeben sich weitere zweckmäßige Ausgestaltungen der Erfindung. Insbesondere kann ein axialer Einbauraum für eine Leiterplatte durch die Axialvorsprünge begrenzt werden.

Weiter können die Axialvorsprünge Radialbegrenzungsflächen aufweisen. Mit diesen können Sie z. B. an Radialbegrenzungsmittel einer Trägerplatte anliegen. Die Trägerplatte kann weiter Anschlagflächen aufweisen, welche als axiale Begrenzung für den Einbauraum der Leiterplatte dient. Zugleich können die Radialbegrenzungsmittel der Trägerplatte den radialen Einbauraum der Leiterplatte begrenzen. Alle diese Maßnahmen dienen dazu die Leiterplatte formschlüssig aufzunehmen und spielfrei im Gehäuse zu halten. Hierzu wird die Leiterplatte zwischen den Befestigungsvorsprüngen der Isolierelemente und dem Motorgehäuse unter Zwischenlage der Trägerplatte geklemmt und in dieser Position fixiert, indem die Isolierelemente oder zumindest ein Isolierelement mit dem Motorgehäuse verschweißt wird.

In Weiterbildung dieses Verfahrens wird vorgeschlagen, dass die Verschweißung des Isolierelements am Motorgehäuse mittels Laser-Durchstrahl-Schweißen erfolgt. Dies ist ein bewährtes Verfahren um Kunststoffteile miteinander zu verbinden. Das Gehäusematerial besteht hierzu aus einem für Laserlicht transparenten Material, während das Isolierelement aus einem dasselbe Laserlicht absorbierenden Material besteht. Das Isolierelement wird über vorzugsweise drei Schweißbereiche mit dem Motorgehäuse verschweißt. Dabei ist zumindest in einem Vormontagezustand ein durch die Außenkonturen des Isolierelements beschriebener Umkreis größer als der Innendurchmesser des Motorgehäuses im Schweißbereich. Hierdurch ergibt sich eine Presspassung zwischen dem Motorgehäuse und dem Isolierelement. Ein von außen auf das Motorgehäuse gerichteter Laserstrahl durchdringt dieses nur geringfügig abgeschwächt und trifft auf den Schweißbereich des Isolierelements, wird dort größtenteils absorbiert und erwärmt somit den Schweißbereich und das angrenzende Motorgehäuse bis das Kunststoffmaterial schmilzt. Durch die Presspassung bewegen sich das Motorgehäuse und das Isolierelement im Schweißbereich geringfügig aufeinander zu und verbinden sich innig miteinander. Um eine gute Schweißverbindung herzustellen muss der gesamte Bereich, in welchem die Schweißpartner aneinander anliegen, erwärmt werden. Hierzu ist die Breite des Schweißbereichs an den Durchmesser, insbesondere dem wirksamen Durchmesser, des Laserstrahls angepasst.

Alternativ zur Verwendung von Kunststoffmaterialien mit unterschiedlichen Transmissionseigenschaften, können auch gleiche teildurchlässige Materialien verwendet werden, die mit einem oder mehreren auf die Schweißstelle konzentrierten Laserstrahl(en) bestrahlt werden. Da das Motorgehäuse an der Oberfläche nicht aufgeschmolzen werden darf, sollte in diesem Bereich die Intensität des Laserstrahls bzw. der Laserstrahlen deutlich geringer sein als im Schweißbereich. Hierzu wird vorgeschlagen, dass sich mehrere aus unterschiedlichen Richtungen kommende Strahlenbündel im Schweißbereich überlagern.

Es wird angestrebt, das Statorblechpaket durch die Isolierelemente unter axialer Vorspannung zu halten. Dadurch können durch Temperaturschwankungen verursachte Verlängerungen oder Verkürzungen des Statorblechpakets gegenüber dem Motorgehäuse ausgeglichen werden.

Um große Axialkräfte aufnehmen zu können sollte zumindest eines der Isolierelemente vollumfänglich oder über einen großen Umfangsbereich oder über große Umfangsbereiche mit dem Motorgehäuse verschweißt sein.

Vorzugsweise sollte das Isolierelement, welches mit der Leiterplatte axial in Berührung steht, vollumfänglich oder über einen großen Umfangsbereich oder über große Umfangsbereiche mit dem Motorgehäuse verschweißt sein. Dadurch ist gewährleistet, dass die Leiterplatte durch das Isolierelement axial sicher eingeklemmt und gehalten ist. Die Zentrierung erfolgt vorzugsweise über die Trägerplatte.

Die Erfindung umfasst auch Pumpenmotoren, insbesondere Kreiselpumpenmotoren, mit den beschriebenen Eigenschaften und Ausgestaltungen.

Ein Ausführungsbeispiel der Erfindung wird nachfolgend anhand der Zeichnung näher erläutert. Es zeigen:
Fig. 1 eine Schnittansicht eines erfindungsgemäßen Elektromotors,
Fig. 2 eine zweite Schnittansicht des erfindungsgemäßen Elektromotors,
Fig. 3 eine Schnittansicht durch ein Isolierelement,
Fig. 4 eine Vorderansicht des Isolierelements,
Fig. 5 eine Seitenansicht des Isolierelements,
Fig. 6 eine räumliche Darstellung des Isolierelements,
Fig. 7 eine Rückansicht des Isolierelements,
Fig. 8 einen Stator des Elektromotors,
Fig. 9 eine vergrößerte Einzelheit A aus Fig. 8 und
Fig. 10 eine räumliche Darstellung des Elektromotors.

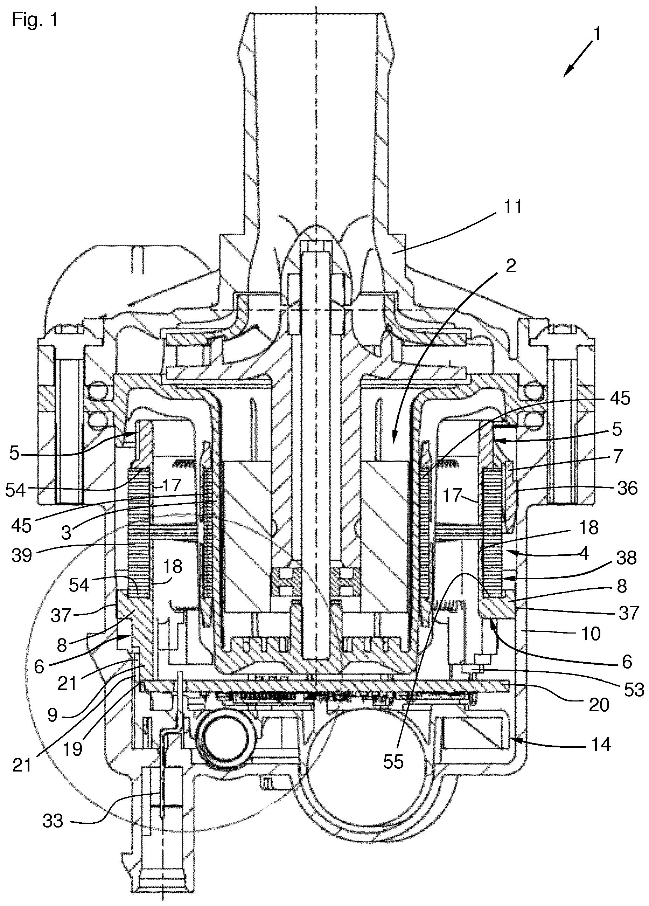

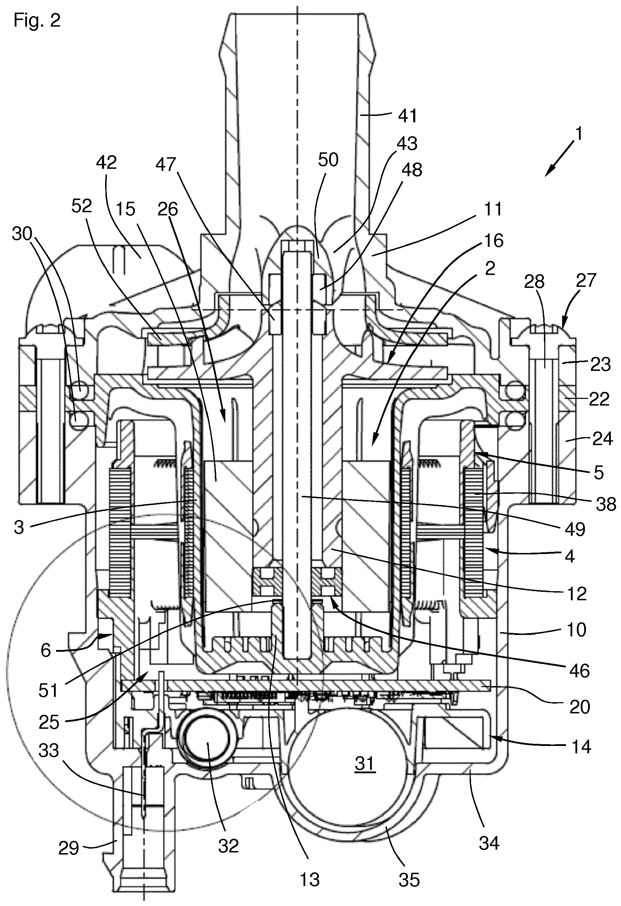

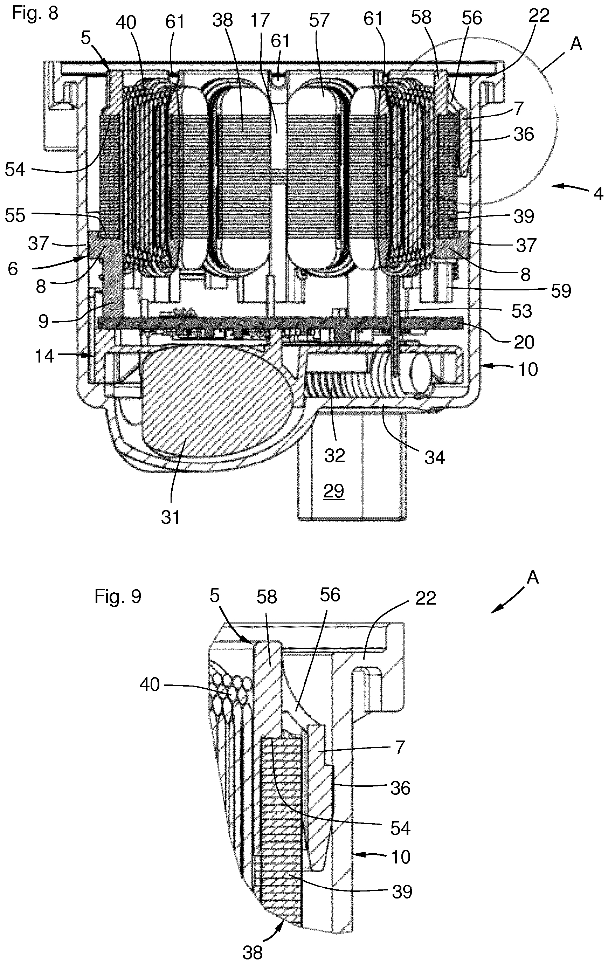

Fig. 1 zeigt eine Schnittansicht eines erfindungsgemäßen Elektromotors 1, mit einem bewickelten Stator 4, einem Permanentmagnetrotor 2, einem Spalttopf 3, einem Pumpenkopf 11, einer Leiterplatte 20, einer Trägerplatte 14 und einem Motorgehäuse 10. Der Stator 4, die Leiterplatte 20 und die Trägerplatte 14 befinden sich in einem Trockenraum 25 (siehe Fig.2). Der Permanentmagnetrotor 2 ist in einem Nassraum 26 (siehe Fig.2) um eine Achse 49 drehbar gelagert, welche einerseits im Spalttopf 3 und andererseits im Pumpenkopf 11 festgelegt ist. Der Stator 4 umfasst ein Statorblechpaket 38 und Isolierelemente 6. Eine Statorwicklung 40 (siehe Fig. 8 und Fig. 9) ist hier nicht dargestellt. Das Statorblechpaket 38 umfasst einen geschlossenen Rückschlussring 39 mit sich radial nach innen erstreckenden Polen 45, welche sich mit Nuten abwechseln, in welche Nutauskleidungsbereiche 17, 18 der Isolierelemente 5, 6 eingelegt sind. Die Isolierelemente 5, 6 weisen Axialabdeckungen 54 bzw. 55 auf, welche den Rückschlussring 39 axial abdecken. Radial erstrecken sich Befestigungsvorsprünge 7, 8 aus den Isolierelementen 5, 6. Die Befestigungsvorsprünge 7, 8 weisen Schweißbereiche 36, 37 auf an welchen sie mit dem Motorgehäuse 10 fest verbunden sind. Der Stator 4 ist über die Isolierelemente 5, 6 so am Motorgehäuse 10 befestigt, dass das Statorblechpaket 38 und die Statorwicklung 40 (Fig. 8 und Fig. 9) axial festgelegt sind. Das zweite Isolierelement 6 ist mit axial eingesteckten Wicklungsanschlüssen 53 bestückt, welche als Einpresskontakte mit der Leiterplatte 20 mechanisch und elektrisch verbunden sind. Der Stator 4 ist vom Spalttopf 3 weitgehend entkoppelt. Ein leiterplattenseitiges Isolierelement 6 umfasst Axialvorsprünge 9, mit welchen sie an der Leiterplatte 20 axial anliegen. Die Leiterplatte 20 ist zwischen den Axialvorsprüngen 9 und der Trägerplatte 14 formschlüssig festgelegt. Die Trägerplatte 14 weist eine Anschlagfläche 19 auf, welche zur axialen Fixierung der Leiterplatte 20 dient. Auf der gegenüberliegenden Seite der Trägerplatte 14 liegt diese an einem Boden 34 (siehe Fig.2) des Motorgehäuses 10 an. Weiter umfasst die Trägerplatte 14 Radialbegrenzungsmittel 21, durch welche der radiale Einbauraum der Leiterplatte 20 begrenzt ist.

Fig. 2 zeigt eine zweite Schnittansicht des erfindungsgemäßen Elektromotors 1, mit dem bewickelten Stator 4, dem Permanentmagnetrotor 2, dem Spalttopf 3, dem Pumpenkopf 11, der Leiterplatte 20, der Trägerplatte 14 und dem Motorgehäuse 10. Der Spalttopf 3 weist einen Spalttopfflansch 22 und der Pumpenkopf 11 einen Pumpenkopfflansch 23 auf. Das Motorgehäuse 10 ist topfartig ausgebildet und weist einen Gehäuseflansch 24 und einen Steckerschacht 29 auf. Der Pumpenkopfflansch 23, der Spalttopfflansch 22 und der Gehäuseflansch 24 weisen Anschraubaugen 27 mit Schrauben 28 auf, durch welche der Pumpenkopf 11 und der Spalttopf 3 mit dem Motorgehäuse 10 verschraubt sind. Beiderseits des Spalttopfflanschs 23 sind O-Ringe 30 als Dichtelemente angeordnet. Die Leiterplatte 20 ist mit einer Vielzahl von SMD-Bauteilen bestückt. Größere Bauteile, wie ein Elektrolytkondensator 31 und eine Drosselspule 32 sind auf der Trägerplatte 14 mechanisch gehalten, aber auf der Leiterplatte 20 elektrisch kontaktiert. Die Leiterplatte 20 und die Trägerplatte 14 sind zwischen dem Stator 4 und dem Motorgehäuse 10 axial fixiert. Die Leiterplatte 20 ist zwischen dem Stator 4 und der Trägerplatte 14 axial und radial fixiert. In der Trägerplatte 14 ist ein Kontaktelement 33 mechanisch aufgenommen, welches ebenfalls mit der Leiterplatte 20 elektrisch verbunden ist. Ein Boden 34 des topfartigen Motorgehäuses 10 weist eine Ausbuchtung 35 auf, in welche an die Form des Elektrolytkondensators 31 angepasst ist. Weiter ist ein Pumpenlaufrad 16 dargestellt, welches mit einer Hohlwelle 12 einstückig ist. Das Pumpenlaufrad 16 weist eine Deckscheibe 52 auf. Der Permanentmagnetrotor 2 mit Pumpenlaufrad 16 ist über ein Festlager 46 und ein sphärisches Gleitlager 47 auf der Achse 49 und zwischen dem Pumpenkopf 11 und dem Spalttopf 3 drehbeweglich gelagert. Das sphärische Lager 47 liegt an einem sphärischen Gegenlager 48 an. Das Festlager 46 ist zwischen einem um die Hohlwelle 12 gespritzten hohlzylindrischen und aus einem kunststoffgebundenen Material bestehenden Permanentmagneten 15 und der Achse 49 angeordnet. Das Festlager 46 lagert das Pumpenlaufrad 16 radial als auch über das Ende der Hohlwelle 12 und einer Anlaufscheibe 51, welche an einer mit dem Spalttopf 3 einstückigen Lageraufnahmehülse 13 anliegt, axial. Weiter sind in Fig. 2 der Nassraum 26, der Trockenraum 25, ein Statorblechpaket 38 und die Isolierelemente 6, 5 dargestellt. Die Statorwicklung 40 (siehe Fig. 8 und Fig. 9) ist hier nicht dargestellt. Der Pumpenkopf 11 umfasst einen Saugstutzen 41 und einen Druckstutzen 42. Im Saugstutzen 41 stellen Speichen 43 eine durchlässige Verbindung zwischen dem Saugstutzen 41 und der Aufnahme 50 her.

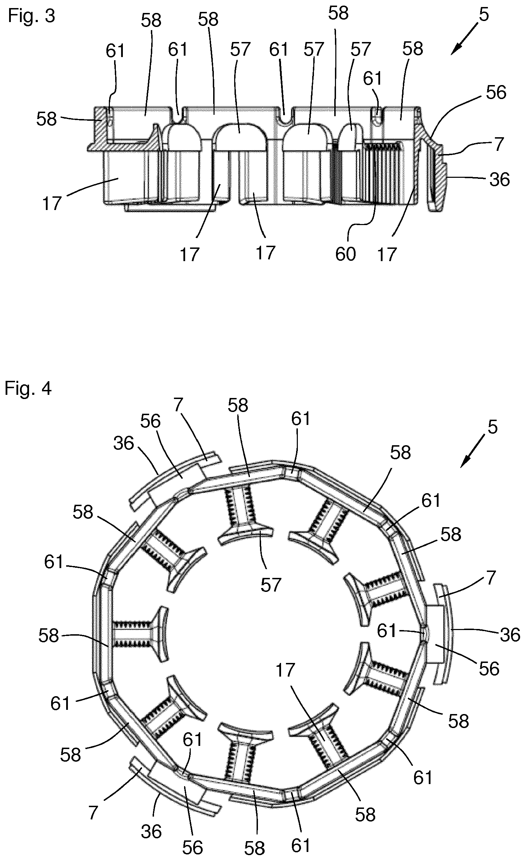

Fig. 3 zeigt eine Schnittansicht durch das erste Isolierelement 5, mit einem Befestigungsvorsprung 7, welcher über einen Brückenabschnitt 56 mit einem Ringabschnitt 58 einstückig ist und einen Schweißbereich 36 aufweist. Die Ringabschnitte 58 sind durch Freisparungen 61 partiell voneinander getrennt. An die Ringabschnitte 58 schließen die Nutauskleidungsbereiche 17 an, welche in ihrem zentral inneren Bereich axial vorspringende Wickelkopfhaltevorsprünge 57 aufweisen. Die Nutauskleidungsbereiche 17 weisen an ihren nach außen zeigenden Oberfläche Drahtführungsrillen 60 auf, welche für eine geordnete Drahtverlegung sorgen. Der Brückenabschnitt 56 ist so dimensioniert, dass er einen zu erwartenden Wärmedehnungsausgleich erlaubt. Hierfür verlaufen die Brückenabschnitte 56 in einem Winkel von ca. 45° +- 15° gegenüber der Motorachse und sind weniger breit ausgebildet als die Befestigungsvorsprünge 7.

Fig. 4 zeigt eine Vorderansicht des ersten Isolierelements 5, mit den Nutauskleidungsbereichen 17, welche auch die Stirnseite der Pole mit abdecken, die Wickelkopfhaltevorsprünge 57, die Ringabschnitte 58, die Freisparungen 61, die Befestigungsvorsprünge 7, mit ihren Schweißbereichen 36 und den Brückenabschnitten 56. Im gezeigten Beispiel sind drei Befestigungsvorsprünge 7 vorgesehen; sie springen radial über die Ringabschnitte 58 vor und verhindern eine großflächige Berührung der Isolierelemente 5 und damit des Stators mit dem Motorgehäuse.

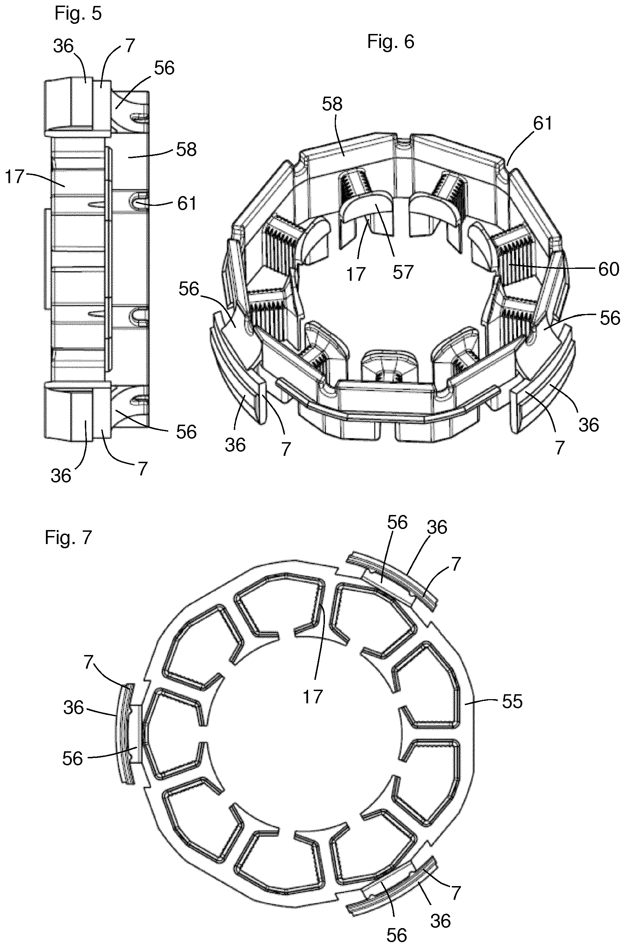

Fig. 5 zeigt eine Seitenansicht des ersten Isolierelements 5, mit den Nutauskleidungsbereichen 17, den Ringabschnitten 58, den Freisparungen 61 und den Befestigungsvorsprüngen 7, mit ihren Schweißbereichen 36 und den Brückenabschnitten 56.

Fig. 6 zeigt eine räumliche Darstellung des ersten Isolierelements 5, mit den Nutauskleidungsbereichen 17, mit ihren Drahtführungsrillen 60, den Wickelkopfhaltevorsprüngen 57, den Befestigungsvorsprüngen 7, mit ihren Schweißbereichen 36, den Ringabschnitten 58, den Freisparungen 61 und den Brückenabschnitten 56.

Fig. 7 zeigt eine Rückansicht des ersten Isolierelements 5, mit den Nutauskleidungsbereichen 17, der Abdeckscheibe 55, den Befestigungsvorsprüngen 7, mit ihren Schweißbereichen 36 und den Brückenabschnitten 56.

Fig. 8 zeigt den im Motorgehäuse 10 befestigten Stator 4 des Elektromotors 1, mit dem ersten Isolierelement 5, dem zweiten Isolierelement 6, dem Statorblechpaket 38, der Leiterplatte 20 und der Trägerplatte 14. Das Statorblechpaket 38 umfasst den Rückschlussring 39, welcher axial durch die erste Abdeckscheibe 54 des ersten Isolierelements 5 und durch die zweite Abdeckscheibe 55 des zweiten Isolierelements 6 abgedeckt ist. Das erste Isolierelement 5 ist mit einem Befestigungsvorsprung 7, der Brücke 56 und dem Schweißbereich 36 dargestellt. Über den Schweißbereich 36 ist das erste Isolierelement 5 mit dem Motorgehäuse 10 fest aber geringfügig nachgiebig verbunden. Die nachgebende Wirkung kann sowohl für einen radialen als auch für einen axialen Wärmedehnungsausgleich sorgen. Weiter weist das erste Isolierelement 5 die Nutauskleidungsbereiche 17, die Ringabschnitte 58 und die Freisparungen 61 auf, trägt die Wicklung 40 und isoliert diese gegenüber dem Statorblechpaket 38. Die Wicklung 40 ist über Wicklungsanschlüsse 53 mit der Leiterplatte 20 elektrisch verbunden. Das zweite Isolierelement 6 besitzt im gezeigten Beispiel Befestigungsvorsprünge 8, die ohne nachgiebige Brückenabschnitte 56 mit dem zweiten Isolierelement 6 verbunden sind. Alternativ können aber auch hier nachgiebige Brückenabschnitte 56 vorgesehen sein. Das zweite Isolierelement 6 ist mit einem Drahtverlegering 59 einstückig, welcher Verbindungsdrähte, die zwischen den Einzelwicklungen verlegt sind, aufnimmt. Das Motorgehäuse 10 umfasst den Spalttopfflansch 22, den Boden 34 und den Steckerschacht 29. Die Trägerplatte 14 nimmt den Elektrolytkondensator 31 und die Drosselspule 32 auf und stützt sich einerseits am Boden 34 des Motorgehäuses 10 und andererseits an der Leiterplatte 20 ab. Die Leiterplatte 20 ist zwischen dem Axialvorsprung 9 und der Trägerplatte 14 axial aufgenommen. Die Befestigungsvorsprünge 7 des ersten Isolierelements 5 und die Befestigungsvorsprünge 8 des zweiten Isolierelements 6 beschreiben einen äußeren Kreis, dessen Durchmesser in einem Vormontagezustand größer ist als der Innendurchmesser des Motorgehäuses 10 an der jeweiligen Verbindungsstelle. Da das Motorgehäuse 10 aus spritzgusstechnischen Gründen in der Regel sich geringfügig zum Boden 34 hin verjüngt, sind die genannten Durchmesser nicht identisch. Zwischen dem Motorgehäuse 10 und den Befestigungsvorsprüngen 8 bzw. 9 besteht nach der Montage, aber vor dem Schweißen, eine Pressverbindung. Diese wird durch den Schweißvorgang zumindest teilweise abgeschwächt.

Fig. 9 zeigt eine vergrößerte Einzelheit A aus Fig. 8, mit dem Motorgehäuse 10, dem Statorblechpaket 38, dem Rückschlussring 39, dem ersten Isolierelement 5 und der Wicklung 40. Das Isolierelement 5 ist dargestellt mit der ersten Abdeckscheibe 54, dem Befestigungsvorsprung 7, mit seinem Schweißbereich 36, dem Brückenabschnitt 56 und dem Ringabschnitt 58. Weiter ist der Spalttopfflansch 22 dargestellt.

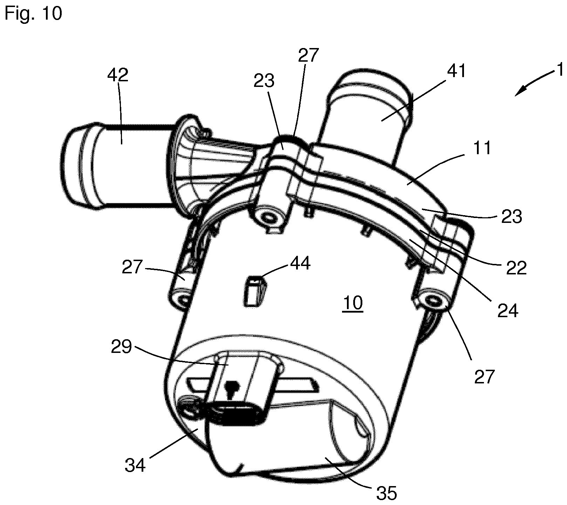

Fig. 10 zeigt eine räumliche Darstellung des Elektromotors 1, mit dem Pumpenkopf 11, mit Saugstutzen 41 und Druckstutzen 42 und einem Pumpenkopfflansch 23, einem mit dem Spalttopf 3 einstückigen Spalttopfflansch 22, dem Motorgehäuse 10 mit dem Gehäuseflansch 24, dem Boden 34, dem Steckerschacht 29 und der Ausbuchtung 35 zur Aufnahme eines Elektrolytkondensators 31. Weiter sind Anschraubaugen 27 zu erkennen, welche im Pumpenkopfflansch 23, dem Spalttopfflansch 22 und dem Gehäuseflansch 24 als Erweiterungen ausgebildet sind und eine Schraubverbindung ermöglichen. Am Motorgehäuse 10 ist eine Axialsicherung 44 ausgebildet, welche dazu dient, eine um das Motorgehäuse 10 gelegte ringförmige Befestigungseinrichtung axial zu sichern.

**Bezugszeichenliste**

| | | | |
|---|---|---|---|
| 1 | Elektromotor | 32 | Drosselspule |
| 2 | Permanentmagnetrotor | 33 | Kontaktelement |
| 3 | Spalttopf | 34 | Boden |
| 4 | Stator | 35 | Ausbuchtung |
| 5 | erstes Isolierelement | 36 | erster Schweißbereich |
| 6 | zweites Isolierelement | 37 | zweiter Schweißbereich |
| 7 | erster Befestigungsvorsprung | 38 | Statorblechpaket |
| 8 | zweiter Befestigungsvorsprung | 39 | Rückschlussring |
| 9 | Axialvorsprung | 40 | Statorwicklung |
| 10 | Motorgehäuse | 41 | Saugstutzen |
| 11 | Pumpenkopf | 42 | Druckstutzen |
| 12 | Hohlwelle | 43 | Speiche |
| 13 | Lageraufnahmehülse | 44 | Axialsicherung |
| 14 | Trägerplatte | 45 | Pol |
| 15 | Permanentmagnet | 46 | Festlager |
| 16 | Pumpenlaufrad | 47 | sphärisches Gleitlager |
| 17 | erster Nutauskleidungsbereich | 48 | sphärisches Gegenlager |
| 18 | zweiter Nutauskleidungsbereich | 49 | Achse |
| 19 | Anschlagfläche | 50 | Aufnahme |
| 20 | Leiterplatte | 51 | Anlaufscheibe |
| 21 | Radialbegrenzungsmittel | 52 | Deckscheibe |
| 22 | Spalttopfflansch | 53 | Wicklungsanschluss |
| 23 | Pumpenkopfflansch | 54 | erste Abdeckscheibe |
| 24 | Gehäuseflansch | 55 | zweite Abdeckscheibe |
| 25 | Trockenraum | 56 | Brückenabschnitt |
| 26 | Nassraum | 57 | Wickelkopfhaltevorsprung |
| 27 | Anschraubauge | 58 | Ringabschnitt |
| 28 | Schraube | 59 | Drahtverlegering |
| 29 | Steckerschacht | 60 | Drahtführungsrille |
| 30 | O-Ring | 61 | Freisparung |
| 31 | Elektrolytkondensator | | |

## Patentansprüche

1. Elektromotor (1), insbesondere Pumpenmotor, mit einem Permanentmagnetrotor (2), einem bewickelten Außenstator (4), umfassend ein Statorblechpaket (38), Isolierelemente (5, 6) und eine Statorwicklung (40), einem aus Kunststoffmaterial bestehenden Motorgehäuse (10) und einem ein Rotorlager tragendes Bauteil, insbesondere einem Pumpenkopf (11), wobei jedes der Isolierelemente (5, 6) einen Ringabschnitt (58) und einen oder mehrere Befestigungsvorsprünge (7, 8) aufweist, wobei die Ringabschnitte (58) an den gegenüberliegenden axialen Seiten des Stators (4) anliegen, wobei ein Brückenabschnitt (56) sich zwischen dem Befestigungsvorsprung (7, 8) und dem Ringabschnitt (58) befindet und den Befestigungsvorsprung (7, 8) mit dem Ringabschnitt (58) verbindet, wobei zumindest eines der Isolierelemente (5, 6) mit dem Motorgehäuse (10) verschweißt ist, wobei ein oder mehrere Befestigungsvorsprünge (7,8) als Axialspielausgleichsmittel und Radialspielausgleichsmittel mit dem Brückenabschnitten (56) zusammenwirken, wobei die Befestigungsvorsprünge (7,8) und Brückenabschnitte (56) zum Isolierelement (5, 6), mit Freisparungen und/oder auslenkbaren Armen versehen sind und/oder als nachgiebige Bereiche ausgebildet sind.

2. Elektromotor nach Anspruch 1, **dadurch gekennzeichnet, dass** beide Isolierelemente (5, 6) mit dem Motorgehäuse verschweißt sind.

3. Elektromotor nach Anspruch 1 oder 2, **dadurch gekennzeichnet, dass** zumindest eines der Isolierelemente (5, 6) Befestigungsvorsprünge (7, 8) umfasst.

4. Elektromotor nach Anspruch 1, 2 oder 3, **dadurch gekennzeichnet, dass** das Motorgehäuse (10) nachgiebige Befestigungsbereiche umfasst, mit welchen zumindest eines der Isolierelemente (5, 6) verschweißt ist.

5. Elektromotor nach zumindest einem der vorangehenden Ansprüche, **dadurch gekennzeichnet, dass** zumindest eines der Isolierelemente (5, 6) eine im Wesentlichen ringförmige Abdeckscheibe (54, 55) aufweist.

6. Elektromotor nach zumindest einem der vorangehenden Ansprüche, **dadurch gekennzeichnet, dass** zumindest ein Isolierelement (5 oder 6) und vorzugsweise beide Isolierelemente (5, 6) Nutauskleidungsbereiche (17, 18) umfassen, welche sich axial in Nuten des Statorblechpakets (38) erstrecken.

7. Elektromotor nach zumindest einem der vorangehenden Ansprüche, **dadurch gekennzeichnet, dass** das zweite Isolierelement (6) Axialvorsprünge (9) umfasst, durch welche ein axialer Einbauraum für eine Leiterplatte (20) begrenzt ist.

8. Elektromotor nach Anspruch 9, **dadurch gekennzeichnet, dass** die Axialvorsprünge (9) Radialbegrenzungsmittel (21) aufweisen.

9. Elektromotor nach Anspruch 10, **dadurch gekennzeichnet, dass** die Radialbegrenzungsmittel (21) der Axialvorsprünge (9) an einem Radialbegrenzungsmittel (21) einer Trägerplatte (14) anliegen.

10. Elektromotor nach Anspruch 11, **dadurch gekennzeichnet, dass** die Trägerplatte (14) Anschlagflächen (19) aufweist, welche als axiale Begrenzung für den Einbauraum der Leiterplatte (20) dient.

11. Elektromotor nach Anspruch 11 oder 12, **dadurch gekennzeichnet, dass** die Radialbegrenzungsmittel (21) den radialen Einbauraum der Leiterplatte (20) begrenzen.

12. Elektromotor nach zumindest einem der vorangehenden Ansprüche, **dadurch gekennzeichnet, dass** die Isolierelemente (5, 6) mit dem Motorgehäuse (10) mittels Laser-Durchstrahl-Schweißen miteinander verschweißt sind.

13. Elektromotor nach zumindest einem der vorangehenden Ansprüche, **dadurch gekennzeichnet, dass** die Isolierelemente (5, 6) das Statorblechpaket (38) axial unter Vorspannung halten.

14. Elektromotor nach zumindest einem der vorangehenden Ansprüche, **dadurch gekennzeichnet, dass** die Isolierelemente (5, 6) unter radialer Vorspannung im Motorgehäuse (10) montiert sind.

15. Elektromotor nach zumindest einem der vorangehenden Ansprüche, **dadurch gekennzeichnet, dass** eines der Isolierelemente (6) vollumfänglich oder über einen großen Umfangsbereich oder über große Umfangsbereiche mit dem Motorgehäuse (10) verschweißt ist.

16. Elektromotor nach Anspruch 17, **dadurch gekennzeichnet, dass** das Isolierelement (6), welches mit der Leiterplatte axial in Berührung steht vollumfänglich oder über einen großen Umfangsbereich oder über große Umfangsbereiche mit dem Motorgehäuse (10) verschweißt ist.

17. Pumpenmotor, insbesondere Kreiselpumpenmotor nach einem der vorangehenden Ansprüche.

## Claims

1. An electric motor (1), in particular a pump motor, having a permanent magnet rotor (2), a wound outer stator (4), comprising a laminated stator core (38), insulating elements (5, 6) and a stator winding (40), a motor housing (10) composed of plastics material and a component part supporting a rotor bearing, in particular a pump head (11), wherein each of the insulating elements (5, 6) has a ring portion (58) and one or more securing projections (7, 8), wherein the ring portions (58) rest against the facing axial sides of the stator (4), wherein a bridge portion (56) is located between the securing projection (7, 8) and the ring portion (58) and connects the securing projection (7, 8) to the ring portion (58), wherein at least one of the insulating elements (5, 6) is welded to the motor housing (10), wherein one or more securing projections (7, 8) cooperate(s) with the bridge portions (56) as axial play compensation means and radial play compensation means, wherein the securing projections (7, 8) and bridge portions (56) of the insulating element (5, 6) are provided with recesses and/or deflectable arms and/or are in the form of yielding regions.

2. An electric motor according to claim 1, **characterised in that** both insulating elements (5, 6) are welded to the motor housing.

3. An electric motor according to claim 1 or 2, **characterised in that** at least one of the insulating elements (5, 6) comprises securing projections (7, 8).

4. An electric motor according to claim 1, 2 or 3, **characterised in that** the motor housing (10) comprises yielding securing regions to which at least one of the insulating elements (5, 6) is welded.

5. An electric motor according to at least one of the preceding claims, **characterised in that** at least one of the insulating elements (5, 6) has a substantially annular covering disc (54, 55).

6. An electric motor according to at least one of the preceding claims, **characterised in that** at least one insulating element (5 or 6) and preferably both insulating elements (5, 6) comprise(s) slot lining regions (17, 18) which extend axially in slots of the laminated stator core (38).

7. An electric motor according to at least one of the preceding claims, **characterised in that** the second insulating element (6) comprises axial projections (9) which bound an axial installation space for a printed circuit board (20).

8. An electric motor according to claim 9, **characterised in that** the axial projections (9) have radial limitation means (21).

9. An electric motor according to claim 10, **characterised in that** the radial limitation means (21) of the axial projections (9) rest against a radial limitation means (21) of a bearer plate (14).

10. An electric motor according to claim 11, **characterised in that** the bearer plate (14) has stop faces (19) which serve to axially bound the installation space of the printed circuit board (20).

11. An electric motor according to claim 11 or 12, **characterised in that** the radial limitation means (21) bound the radial installation space of the printed circuit board (20).

12. An electric motor according to at least one of the preceding claims, **characterised in that** the insulating elements (5, 6) are welded to the motor housing (10) by means of laser transmission welding.

13. An electric motor according to at least one of the preceding claims, **characterised in that** the insulating elements (5, 6) keep the laminated stator core (38) axially pre-tensioned.

14. An electric motor according to at least one of the preceding claims, **characterised in that** the insulating elements (5, 6) are mounted in the motor housing (10) in a radially pre-tensioned manner.

15. An electric motor according to at least one of the preceding claims, **characterised in that** one of the insulating elements (6) is welded over its entire perimeter or over a large perimeter region or over large perimeter regions to the motor housing (10).

16. An electric motor according to claim 17, **characterised in that** the insulating element (6), which is in contact with the printed circuit board axially, is welded over its entire perimeter or over a large perimeter region or over large perimeter regions to the motor housing (10).

17. A pump motor, in particular a centrifugal pump motor, according to any one of the preceding claims.

## Revendications

1. Moteur électrique (1), en particulier moteur de pompe, avec un rotor à aimant permanent (2), un stator extérieur (4) bobiné, comprenant un paquet de tôles de stator (38), des éléments isolants (5, 6) et un enroulement statorique (40), un carter de moteur (10) constitué d'une matière plastique et un élément portant un palier de rotor, en particulier une tête de pompe (11), dans lequel chacun des éléments isolants (5, 6) présente une section annulaire (58) et une ou plusieurs parties saillantes de fixation (7, 8), dans lequel les sections annulaires (58) reposent contre les faces axiales opposées du stator (4), dans lequel une section pont (56) se situe entre la partie saillante de fixation (7, 8) et la section annulaire (58) et relie la partie saillante de fixation (7, 8) à la section annulaire (58), dans lequel au moins un des éléments isolants (5, 6) est soudé au carter de moteur (10), dans lequel une ou plusieurs parties saillantes de fixation (7, 8) coopèrent en tant que moyens de compensation de jeu axial et moyens de compensation de jeu radial avec les sections pont (56), dans lequel les parties saillantes de fixation (7, 8) et les sections pont (56) par rapport à l'élément isolant (5, 6) sont pourvues d'évidements et/ou de bras pouvant être déviés et/ou sont réalisées sous la forme de zones flexibles.

2. Moteur électrique selon la revendication 1, **caractérisé en ce que** les deux éléments isolants (5, 6) sont soudés au carter de moteur.

3. Moteur électrique selon la revendication 1 ou 2, **caractérisé en ce qu'**au moins un des éléments isolants (5, 6) comprend des parties saillantes de fixation (7, 8).

4. Moteur électrique selon la revendication 1, 2 ou 3, **caractérisé en ce que** le carter de moteur (10) comprend des zones de fixation flexibles auxquelles au moins un des éléments isolants (5, 6) est soudé.

5. Moteur électrique selon au moins l'une des revendications précédentes, **caractérisé en ce qu'**au moins un des éléments isolants (5, 6) présente un disque de recouvrement (54, 55) sensiblement annulaire.

6. Moteur électrique selon au moins l'une des revendications précédentes, **caractérisé en ce qu'**au moins un élément isolant (5 ou 6) et de préférence les deux éléments isolants (5, 6) comprennent des zones de revêtement de rainures (17, 18), lesquelles s'étendent axialement dans des rainures du paquet de tôles de stator (38).

7. Moteur électrique selon au moins l'une des revendications précédentes, **caractérisé en ce que** le deuxième élément isolant (6) comprend des parties saillantes axiales (9) par lesquelles un espace de montage axial pour une carte de circuits imprimés (20) est délimité.

8. Moteur électrique selon la revendication 9, **caractérisé en ce que** les parties saillantes axiales (9) présentent des moyens de délimitation radiale (21).

9. Moteur électrique selon la revendication 10, **caractérisé en ce que** les moyens de délimitation radiale (21) des parties saillantes axiales (9) s'appliquent contre un moyen de délimitation radiale (21) d'une plaque de support (14).

10. Moteur électrique selon la revendication 11, **caractérisé en ce que** la plaque de support (14) présente des surfaces de butée (19), lesquelles servent de délimitation axiale à l'espace de montage de la carte de circuits imprimés (20).

11. Moteur électrique selon la revendication 11 ou 12, **caractérisé en ce que** les moyens de délimitation radiale (21) délimitent l'espace de montage radial de la carte de circuits imprimés (20).

12. Moteur électrique selon au moins l'une des revendications précédentes, **caractérisé en ce que** les éléments isolants (5, 6) sont soudés au carter de moteur (10) les uns aux autres par soudage laser par transparence.

13. Moteur électrique selon au moins l'une des revendications précédentes, **caractérisé en ce que** les éléments isolants (5, 6) maintiennent le paquet de tôles de stator (38) axialement sous l'effet d'une précontrainte.

14. Moteur électrique selon au moins l'une des revendications précédentes, **caractérisé en ce que** les éléments isolants (5, 6) sont montés dans le carter de moteur (10) sous l'effet d'une précontrainte radiale.

15. Moteur électrique selon au moins l'une des revendications précédentes, **caractérisé en ce qu'**un des éléments isolants (6) est soudé au carter de moteur (10) sur toute sa périphérie ou sur une zone périphérique importante ou sur des zones périphériques importantes.

16. Moteur électrique selon la revendication 17, **caractérisé en ce que** l'élément isolant (6), lequel est axialement en contact avec la carte de circuits imprimés, est soudé au carter de moteur (10) sur toute sa périphérie ou sur une zone périphérique importante ou sur des zones périphériques importantes.

17. Moteur de pompe, en particulier moteur de pompe centrifuge selon l'une quelconque des revendications précédentes.
